# EUROPEAN PATENT SPECIFICATION

(11) **EP 3 846 956 B1**
(45) Date of publication and mention of the grant of the patent: **08.11.2023**
(21) Application number: 19779168.4
(22) Date of filing: 02.09.2019
(51) Int. Cl.: B23B 13/08

(54) **WAVE-SPRING ELEMENT FOR APPARATUSES FOR LOADING AND ADVANCING BARS TO MACHINE TOOLS**
WELLENFEDERELEMENT FÜR VORRICHTUNGEN ZUM LADEN UND BEFÖRDERN VON STANGEN ZU WERKZEUGMASCHINEN
ÉLÉMENT RESSORT ONDULÉ POUR APPAREILS PERMETTANT DE CHARGER ET DE FAIRE AVANCER DES BARRES SUR DES MACHINES-OUTILS

(30) Priority: 03.09.2018 IT 201800008314
(43) Date of publication of application: 14.07.2021
(73) Proprietor: Cucchi Giovanni & C. S.r.l., 20041 Bussero (IT)
(72) Inventor: CUCCHI, Cesare, 20041 Bussero (IT)
(74) Representative: Luppi Intellectual Property S.r.l.
(86) International application number: PCT/IB2019/057387
(87) International publication number: WO 2020/049439

(56) References cited:
- EP-A2- 0 370 240
- EP-B1- 0 370 240
- SU-A2- 617 172
- US-A- 3 930 568

## Description

### BACKGROUND OF THE INVENTION

The present invention relates to a wave-spring element for a loader-apparatus for loading bars which must be fed to a machine tool, for example a single or multispindle lathe. In particular, the wave-spring element serves to contain and guide a bar during its rotation and advancement towards the machine tool and acts to dampen the flexural vibrations to which the bar is subjected during its rotation.

### STATE OF THE ART

In the field of bar machining on machine tools, for example lathes, loading apparatuses are used for automatic bar feeding.

These loading apparatuses have a support drum and special containment and guide devices for the bars themselves.

The bars that are fed to the lathe, during processing, are rotated around their longitudinal axis.

During the rotation, the bars, especially if slender, that is thin, i.e. having a very small cross-section in relation to their longitudinal length, are subject to intense stresses and flexural vibrations due to the centrifugal effect.

It is important to reduce these flexural vibrations as much as possible, so that the processing can take place correctly without danger and a qualitatively acceptable product can be obtained.

The aforementioned containment and guide devices can have helical springs which receive the bar to be worked inside to contain and guide it so as to damp its flexural vibrations.

Such springs are composed by a plurality of turns which can have different diameters in different areas, and which follow one another so as to give the spring itself a side profile, with narrow-diameter zones - intended to come into contact directly with the bar received inside them - and areas of greater diameter, intended to be separated and not in contact with the surface of the bar.

A drawback of these springs is that unfortunately the direct contact, and the relative sliding, between the smaller diameter turns and the bar, during the latter's translation movement, causes damage to the surface of the bar itself.

In fact, on the bar the innermost surfaces of the metal wire are in contact which constitutes the turns themselves and very localized contact zones are established with rather high pressures.

This problem is the cause of frequent surface damage to the machined bars, and often the final product processed does not reach the required quality levels.

In the light of the aforementioned limits, therefore, there is ample room for improvement for the containment and guide devices for the bars within the loading apparatuses for machine tools.

A spring element for guiding pipes is known from SU617172.

### OBJECTS OF THE INVENTION

An object of the present invention is to improve the devices for guiding and damping the flexural vibrations of the bars within bar loading apparatuses for lathes or other machine tools.

Another object is to provide a structurally and functionally simplified solution for damping the flexural vibrations of the bars within the loading apparatus for machine tools.

Another object is to provide an affordable wave-spring element but highly capable of preserving the bars from any type of damage.

### BRIEF DESCRIPTION OF THE INVENTION

The above is achievable by means of a wave-spring element as defined in claim 1.

A method is also provided for producing the aforementioned wave-spring element as specified in claim 8.

Owing to the invention, the aforementioned drawbacks are overcome.

In particular, the wave-spring element according to the invention, with an advantageously simplified structure, is able to effectively carry out its function as a damper-element of flexural vibrations while preserving the surface of the bars from undesired damage caused by relative sliding with the turns that make up the wave-spring element itself.

Further characteristics and advantages will become apparent from the description, from the claims and from the attached drawings.

### BRIEF DESCRIPTION OF THE DRAWINGS

The invention can be better understood and implemented with reference to the attached drawings, which illustrate an exemplifying and non-limiting embodiment, in which:

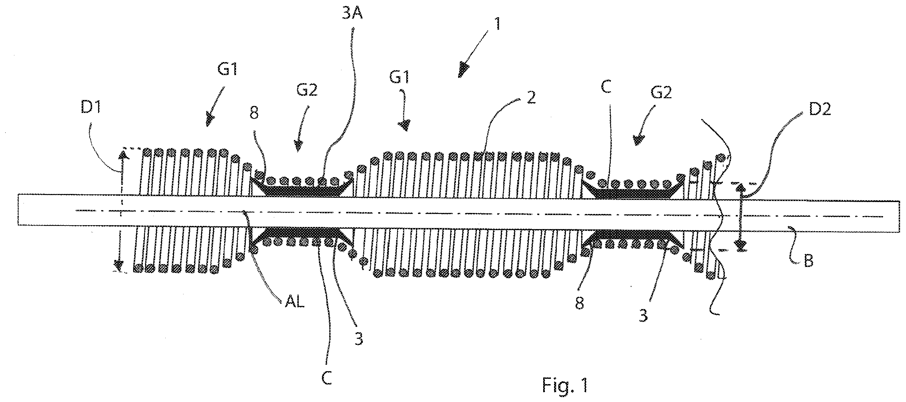

Figure 1 is a schematic longitudinal section view of the wave-spring element inside which a bar is housed;

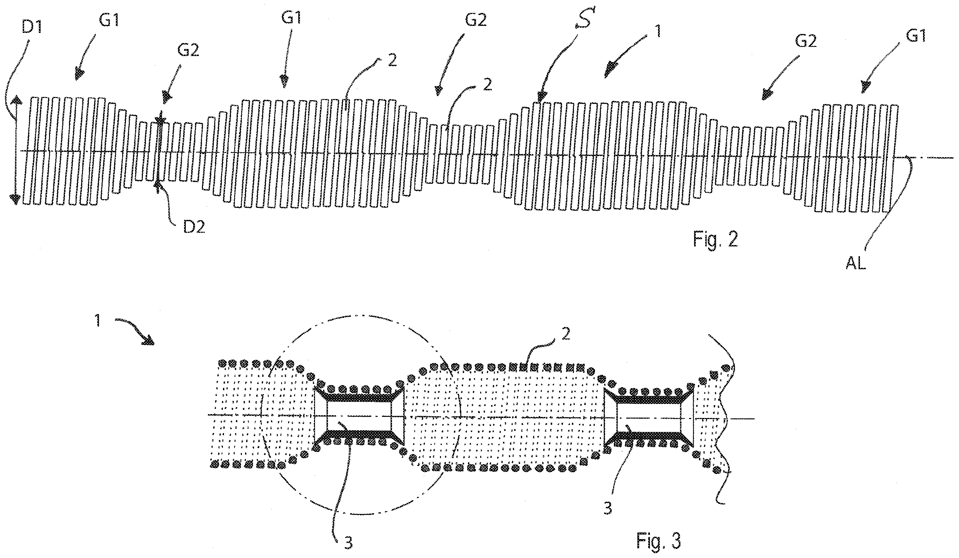

Figure 2 is another view of the wave-spring element;
Figure 3 shows a part of Figure 1;
Figure 4 is an enlarged detail of Figure 3;
Figure 5 shows a first version of the bush or sleeve means of the wave-spring element according to the invention;
Figure 6 shows a second version of bush means included in the wave-spring element;
Figure 7 is an enlarged view of the bush means of Figure 6;

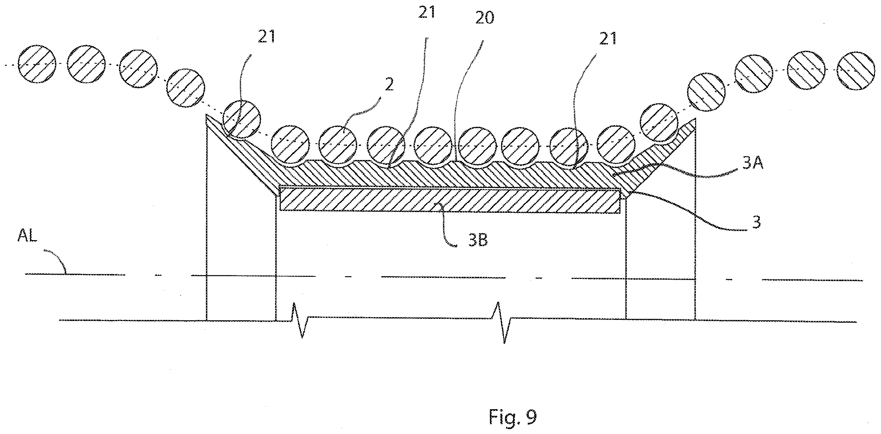

Figures 8 and 9 are interrupted views showing other possible versions of bush means provided with housing seats for the turns of the wave-spring element.

### DETAILED DESCRIPTION OF THE INVENTION

With reference to the attached figures, a wave-spring element 1 according to the invention is described below, suitable for a bar loader apparatus arranged to feed the bars themselves to a machine tool, such as for example a mono or multi-spindle-lathe.

The wave-spring element 1 comprises a plurality of turn elements 2 arranged one adjacent to the other. The turn elements 2 have different diameters and are grouped in first groups G1 of turn elements with a larger diameter D1 and second groups G2 of turn elements with a smaller diameter D2.

The turn elements 2 are made of curved metal wire according to the desired helical path.

Intermediate turns 2' placed between each first group G1 and the second adjacent group G2 are also provided, these intermediate turns 2' having a variable diameter ranging from the aforementioned diameter D1 to the diameter D2. Substantially, the intermediate turns 2' act as a gradual connection between the groups G1 and the groups G2 and contribute to give the wave-spring element 1 the sinusoidal or wavy shape.

In other words, the first groups G1 and the second groups G2 alternate one after the other along a longitudinal axis AL and between each first G1 and each second group G2 the aforesaid intermediate turns 2' with variable diameter are interposed.

The first groups G1 and the second groups G2, together with the intermediate turns 2' alternate so as to define, for the wave-spring element 1, a surface S having a sinusoidal profile, i.e. wavy. For this reason, it can be assumed that the wave-spring element 1 develops with a "sea wave" shape.

The wave-spring element 1 thus defined is suitable to contain and guide a bar B, so as to damp the flexural vibrations to which the same bar B is subjected during its rotation.

The wave-spring element 1 according to the invention is also provided with one or more bush or sleeve means, each one arranged inside a respective second group G2 of turns with a smaller diameter D2.

The bush means 3 are configured to come into contact with, and receive inside, respective portions of the bar B to avoid contact with, and avoid the sliding with respect to, all the turns which are included in the wave-spring element 1. It is possible to provide any number of bush means 3 distributed along the longitudinal axis AL and spaced apart from one another by an amount appropriately chosen in relation to the diameter of the bar B to be supported and based on the thickness of the metal wire of the turns.

The bush means 3 comprises a tubular element 3A having a cylindrical portion C on which the turn elements 2 of a respective second group G2 of turns with smaller diameter D2 are wound.

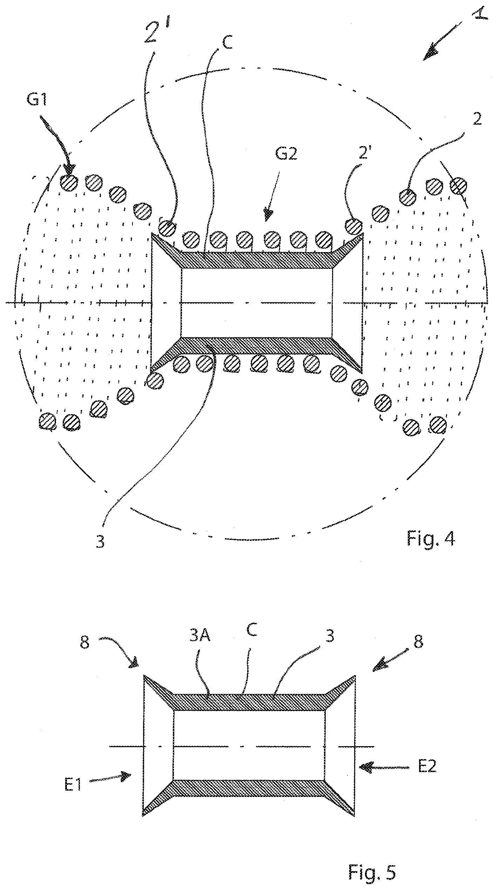

As best seen in the enlarged views in fig. 4 and 5, the bush means 3 are provided with widened edge portions 8 at each of the two ends E1, E2 of a tubular element 3A.

The aforesaid widened edge portions 8 are configured to couple externally with the inner surface of intermediate turns 2' having a larger diameter than the diameter D2 and placed at the ends of the respective second group G2.

In this way, the widened edge portions 8 constrain, by means of a shape coupling, the bush means 3 to the wave-spring element 1. In other words, the flared shape of the ends of the bush means 3 causes the latter to remain stuck stably in the plurality of turns of variable diameter which make up the wave-spring element 1.

The widened edge portions 8 have internally a truncated cone-shaped surface diverging towards the outside to favour the advancement of the bar B and to promote its insertion inside the respective bush means 3.

The turns 2 with smaller diameter D2 of each second group G2 are wound tightly, and therefore tight, on the respective tubular elements 3A. The tight winding of these turns on the tubular 3A elements makes their position stable without risk of separation.

In one version, (that is not in the scope of the invention) the aforesaid turns 2 with a smaller diameter D2 of each second group G2 can be glued or welded or are connected through melting to the respective tubular elements 3A.

During operation, the wave-spring element 1, according to the version just described, rotates together with the bar B contained therein. There is therefore no relative rotation of the bar B with respect to the bush means 3.

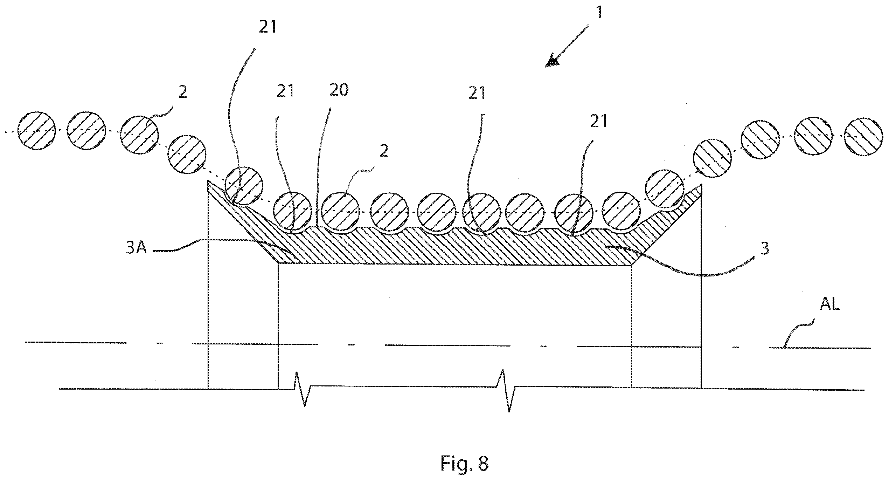

According to the invention, shown in Figure 8, on the outer surface 20 of the tubular elements 3A, recess housing seats 21 are obtained extending sinusoidally around the longitudinal axis AL and shaped to house the respective turns 2 and keep them in a firm position with respect to said bush means 3.

The corrugated profile, or in any case provided with housing seats of the external surface 20, which conforms to the wavy profile of the sequence of turns 2, ensures that there are no relative displacements of the bush means 3 with respect to the turns 2 themselves.

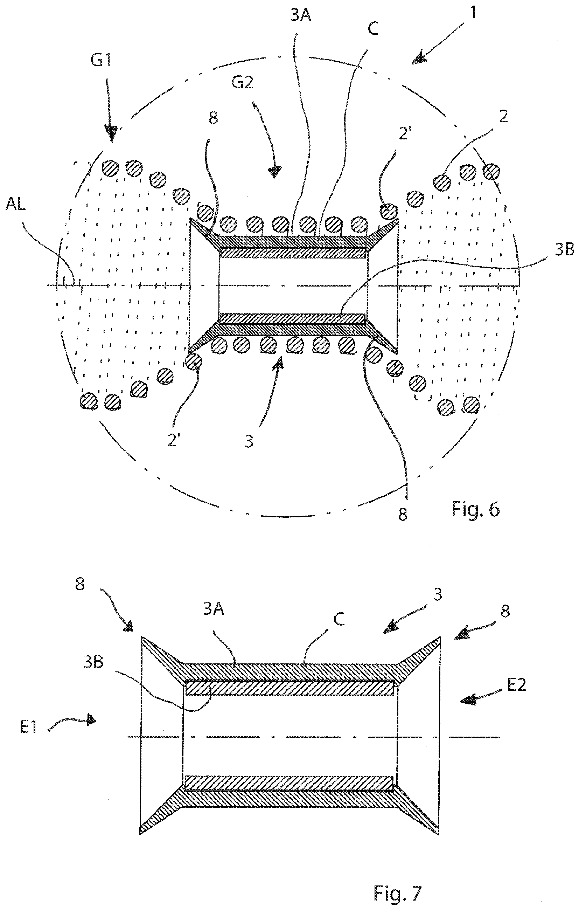

According to another version shown in Fig. 6 and 7, the bush means 3 comprise an annular element 3B located internally to the respective tubular element 3A, rotatable with respect to the latter.

With this configuration, the annular element 3B and the respective tubular element 3A together define a bush unit 3 or sliding bearing unit 3.

According to this version, the annular element 3B is rotatable, together with the bar B, around the longitudinal axis AL and relative to the tubular element 3A which instead, during operation, can remain in a stationary position together with the plurality of turns 2.

In a further version, in combination with the previous versions described, at least the turns 2 of the first G1 groups are made of plasticized metal wire or covered with a layer of material suitable for not scratching or damaging the bars B.

Similarly to what has already been disclosed, also for this version of the bush means 3 made in two relatively movable and coaxial pieces, recess-housing seats 21 on the external surface 20 of the tubular elements 3A are provided.

These housing seats 21 with a recess extend sinusoidally about the longitudinal axis AL and are shaped to house the respective turns 2 and keep them in a fixed position with respect to said bush means 3.

Also in this case, therefore, the corrugated profile, or in any case provided with recessed areas of the external surface 20 of the bush means 3, conforming to the corrugated profile of the sequence of turns 2 ensures that there are no relative displacements of the bush means 3 compared to the same turns 2.

The wave-spring element 1, in the various versions just described, can be made by a method that includes the following steps:
a) winding a first portion of metal wire to generate a first group G1 of mutually adjacent turns 2 and having the first diameter D1, and
b) winding a second portion of the metal wire, subsequent to the first portion, around bush means (2) so as to generate a second group G2 of turns 2 mutually adjacent and having a second diameter D2 smaller than the first diameter D1, in which the turns 2 of the second group G2 are tightened around the bush means 3 to hold the latter in a stable position.

The aforementioned steps a) and b) have to be repeated to obtain a wave-spring element 1 with a sinusoidal profile extending along a longitudinal axis AL until a desired length is reached for this wave-spring element 1.

From what has been described and shown, it follows that the wave-spring element 1 according to the present invention achieves the previously stated aims and advantages.

Specifically, the described wave-spring element 1, although structurally and functionally simplified and therefore also affordable and simple to implement, effectively performs its function as a damper for the flexural vibrations of the bars while at the same time preserving the bars from any type of damages (due for example due to the relative sliding with the turns), owing to the presence of the bush means 3.

In fact the bar B is in contact, on several zones distributed along the longitudinal axis AL, with the cylindrical internal surfaces of the bush means 3, which being smooth and not presenting peak and valley areas (as instead would occur with the contact direct with the turns) they do not exert localized pressures and are not able to scratch the surface of the bar B.

Therefore, thanks to the invention final finished products are obtained which are qualitatively superior to those fed by traditional feeding devices which are not immune to the frequent risk of scratching the surface of the bars destined to work on machine tools.

It is possible to configure and dimension the wave-spring element 1 in a desired manner according to the applications for which it is intended.

Any component forming the wave-spring element 1 according to the invention can be replaced with other equivalents in structural and functional terms, and the materials, insofar as they are compatible with the specific use for which they are intended, can be suitably chosen according to the requirements and the available state of art.

Variants and/or additions to what has been described above and illustrated in the attached drawings are possible, without thereby departing from the scope of protection claimed.

## Claims

1. Wave-spring element for a bar loading apparatus, comprising a plurality of turn elements (2) arranged adjacent to one another, said plurality of turn elements (2) being defined by first groups (G1) of turn elements with a greater diameter (D1) and second groups (G2) of turn elements with a lesser diameter (D2), said first groups (G1) and said second groups (G2) alternating along a longitudinal axis (AL) so as to define a surface (S) having a sinusoidal profile, said plurality of turn elements (2) being configured for containing and guiding a bar (B) to a machine tool, such as a lathe, and for damping the flexure vibrations to which said bar (B) is subjected during rotation thereof, there being further provided bush means (3) arranged inside each second group (G2) of turns having a lesser diameter (D2), said bush means (3) being configured for coming into contact with, and receiving inside, respective portions of said bar (B) to avoid contact thereof with, and sliding with respect to said turns (2),
the wave-spring element being **characterized in that** on an outer surface (20) of said bush means (3) recess-housing-seats (21) are obtained that extend sinusoidally and are shaped for housing the respective turns (2) and maintain said turns in a stationary position with respect to said bush means (3).

2. Wave-spring element according to claim 1, wherein said bush means (3) comprises a tubular element (3A) having a cylindrical portion (C) on which the turn elements (2) are wrapped of a respective second group (G2) of turns with a lesser diameter (D2), and wherein between each first group (G1) and an adjacent second group (G2) there are provided intermediate turns (2') having a diameter comprised between said first diameter (D1) and said second diameter (D2).

3. Wave-spring element according to claim 2, wherein said bush means (3) is provided with widened edge portions (8) at each of the two ends (E1,E2) of said tubular element (3A), said widened edge portions (8) being configured for coupling externally with the inner surface of turns (2') of greater diameter than the diameter (D2) and placed at the ends of the respective second group (G2), so as to bind, in a shapingly coupled manner, said bush means (3) to said wave-spring element (1).

4. Wave-spring element according to claim 3, wherein said widened edge portions (8) have internally a frustoconical surface diverging to the exterior to favour the advancement of the bar (B) and promote the insertion thereof inside the respective bush means (3).

5. Wave-spring element according to any one of claims 2 to 4, wherein said bush means (3) each comprise an annular element (3B) placed inside the respective tubular element (3A) and rotatably movable with respect to the latter, said annular element (3B) and tubular element (3A) defining together a bush unit or sliding bearing, said annular element (3B) being rotatable, together with said bar (B), around said longitudinal axis in relation to said tubular element (3A) that during operation can remain in a stationary position together with said plurality of turn elements (2).

6. Wave-spring element according to any preceding claim, wherein at least the turns (2) of the first groups (G1) are made of a metal wire that is plasticised or coated with a layer of material that is suitable for not scratching or damaging the bars (B).

7. Wave-spring element according to any preceding claim, wherein said turns (2) are made of curved metal wire, and said bush means (3) are distributed, in a desired number, along said longitudinal axis (AL) and are spaced apart from one another by a quantity chosen in relation to the diameter of the bar (B) to be supported and on the basis of the thickness of said metal wire.

8. Method for producing a wave-spring element according to claim 1, comprising the steps of:
- a) winding a first portion of a metal wire for generating a first group (G1) of turns (2) that are mutually adjacent and have a first diameter (D1),
- b) winding a second portion, after said first portion, of said metal wire around bush means (3) so as to generate a second group (G2) of turns (2) that are mutually adjacent and have a second diameter (D2) that is less than said first diameter (D1), wherein the turns (2) of said second group (G2) are tightened around said bush means (3) to keep the latter in a stable position,
- repeating alternatively said steps a) and b) to obtain a spring-element (1) with a sinusoidal profile that extends along a longitudinal axis (AL) until a desired length is reached,
the method being **characterized in that** it further comprises the step of:
- Obtaining recess-housing-seats (21) on an outer surface (20) of the tubular element (3A) of said bush means (3), wherein said recess-housing-seats (21) extend sinusoidally around said longitudinal axis (AL) and are shaped for housing the respective turns (2) and keep said turns (2) in a firm position with respect to said bush means (3).

## Patentansprüche

1. Wellenfederelement für eine Einrichtung zum Laden von Stangen, umfassend eine Vielzahl von Windungselementen (2), die angrenzend aneinander angeordnet sind, wobei die Vielzahl von Windungselementen (2) durch erste Gruppen (G1) von Windungselementen mit einem größeren Durchmesser (D1), und zweite Gruppen (G2) von Windungselementen mit einem geringeren Durchmesser (D2) definiert sind, wobei die ersten Gruppen (G1) und die zweiten Gruppen (G2) einander entlang einer Längsachse (AL) abwechseln, um eine Oberfläche (S) zu definieren, die ein Sinusprofil aufweist, wobei die Vielzahl von Windungselementen (2) konfiguriert sind, um eine Stange (B) zu enthalten und zu einem Maschinenwerkzeug zu führen, wie eine Drehmaschine, und zum Dämpfen der Biegeschwingungen, welchen die Stange (B) bei deren Drehung ausgesetzt ist, wobei weiter ein Buchsenmittel (3) bereitgestellt ist, das innerhalb jeder zweiten Gruppe (G2) von Windungen angeordnet ist, die einen geringeren Durchmesser (D2) aufweisen, wobei die Buchsenmittel (3) konfiguriert sind, um in Kontakt mit jeweiligen Abschnitten der Stange (B) zu treten, und diese innen aufzunehmen, um deren Kontakt mit den Windungen (2) zu vermeiden, und in Bezug dazu zu gleiten,
wobei das Wellenfederelement **dadurch gekennzeichnet ist, dass** auf einer Außenoberfläche (20) der Buchsenmittel (3) Aussparungs-Einhausungs-Sitze (21) erhalten werden, die sich sinusförmig erstrecken, und zum Einhausen der jeweiligen Windungen (2) und Halten der Windungen in einer stationären Position in Bezug auf die Buchsenmittel (3) geformt sind.

2. Wellenfederelement nach Anspruch 1, wobei die Buchsenmittel (3) ein röhrenförmiges Element (3A) umfassen, das einen zylindrischen Abschnitt (C) aufweist, auf den die Windungselemente (2) von einer jeweiligen zweiten Gruppe (G2) von Windungen mit einem geringeren Durchmesser (D2) gewickelt sind, und wobei zwischen jeder ersten Gruppe (G1) und einer angrenzenden zweiten Gruppe (G2) Zwischenwindungselemente (2') bereitgestellt sind, die einen Durchmesser aufweisen, der zwischen dem ersten Durchmesser (D1) und dem zweiten Durchmesser (D2) liegt.

3. Wellenfederelement nach Anspruch 2, wobei die Buchsenmittel (3) mit erweiterten Kantenabschnitten (8) an jedem der beiden Enden (E1,E2) des röhrenförmigen Elements (3A) bereitgestellt sind, wobei die erweiterten Kantenabschnitte (8) konfiguriert sind, um außen mit der Innenoberfläche der Windungen (2') mit einem größeren Durchmesser als dem Durchmesser (D2) gekoppelt zu werden, und an den Enden der jeweiligen zweiten Gruppe (G2) platziert sind, um die Buchsenmittel (3) in einer formschlüssigen Weise an das Wellenfederelement (1) zu binden.

4. Wellenfederelement nach Anspruch 3, wobei der erweiterte Kantenabschnitt (8) innen eine kegelstumpfförmige Oberfläche aufweist, die nach außen divergiert, um das Vorankommen der Stange (B) zu fördern, und deren Einführung in die jeweiligen Buchsenmittel (3) zu unterstützen.

5. Wellenfederelement nach einem der Ansprüche 2 bis 4, wobei die Buchsenmittel (3) jeweils ein ringförmiges Element (3B) umfassen, das innerhalb des jeweiligen röhrenförmigen Elements (3A) platziert ist, und in Bezug auf letzteres drehend beweglich ist, wobei das ringförmige Element (3B) und das röhrenförmige Element (3A) gemeinsam eine Buchseneinheit oder ein Gleitlager definieren, wobei das ringförmige Element (3B) gemeinsam mit der Stange (B) um die Längsachse in Bezug auf das röhrenförmige Element (3A) drehbar ist, welches während des Vorgangs gemeinsam mit der Vielzahl von Drehelementen (2) in einer stationären Position verbleiben kann.

6. Wellenfederelement nach einem vorstehenden Anspruch, wobei mindestens die Windungen (2) der ersten Gruppen (G1) aus einem Metalldraht gefertigt sind, welcher plastifiziert, oder mit einer Schicht aus einem Material beschichtet ist, das geeignet ist, um die Stangen (B) nicht zu zerkratzen oder zu beschädigen.

7. Wellenfederelement nach einem vorstehenden Anspruch, wobei die Windungen (2) aus gekrümmtem Metalldraht gefertigt sind, und die Buchsenmittel (3) in einer gewünschten Anzahl entlang der Längsachse (AL) verteilt sind, und voneinander durch eine Menge beabstandet sind, die in Bezug auf den Durchmesser der Stange (B), die zu tragen ist, und auf der Grundlage der Dicke des Metalldrahtes ausgewählt wird.

8. Verfahren zur Herstellung eines Wellenfederelements nach Anspruch 1, die folgenden Schritte umfassend:
- a) Wickeln eines ersten Abschnitts eines Metalldrahts zum Erzeugen einer ersten Gruppe (G1) von Windungen (2), die aneinander angrenzen und einen ersten Durchmesser (D1) aufweisen,
- b) Wickeln eines zweiten Abschnitts, nach dem ersten Abschnitt, des Metalldrahts um Buchsenmittel (3) herum, um eine zweite Gruppe (G2) von Windungen (2) zu erzeugen, die aneinander angrenzend sind, und einen zweiten Durchmesser (D2) aufweisen, der geringer als der erste Durchmesser (D1) ist, wobei die Windungen (2) der zweiten Gruppe (G2) um die Buchsenmittel (3) herum gestrafft sind, um letztere in einer stabilen Position zu halten,
- abwechselnd Wiederholen der Schritte a) und b), um ein Federelement (1) mit einem Sinusprofil zu erhalten, das sich entlang einer Längsachse (AL) erstreckt, bis eine gewünschte Länge erreicht wird,
wobei das Verfahren **dadurch gekennzeichnet ist, dass** es weiter die folgenden Schritte umfasst:
- Erhalten von Aussparungs-Einhausungs-Sitzen (21) auf einer Außenoberfläche (20) des röhrenförmigen Elements (3A) der Buchsenmittel (3), wobei sich die Aussparungs-Einhausungs-Sitze (21) sinusförmig um die Längsachse (AL) herum erstrecken, und geformt sind, um die jeweiligen Windungen (2) einzuhausen, und die Windungen (2) in einer festen Position in Bezug auf die Buchsenmittel (3) zu halten.

## Revendications

1. Élément formant ressort ondulé pour un appareil de chargement de barres, comprenant une pluralité d'éléments de rotation (2) agencés les uns à côté des autres, ladite pluralité d'éléments de rotation (2) étant définie par des premiers groupes (G1) d'éléments de rotation ayant un diamètre plus grand (D1) et des seconds groupes (G2) d'éléments de rotation ayant un diamètre plus petit (D2), lesdits premiers groupes (G1) et lesdits seconds groupes (G2) alternant le long d'un axe longitudinal (AL) de manière à définir une surface (S) présentant un profil sinusoïdal, ladite pluralité d'éléments de rotation (2) étant configurée pour contenir et guider une barre (B) jusqu'à une machine-outil, telle qu'un tour, et pour amortir les vibrations de flexion auxquelles ladite barre (B) est soumise lors de sa rotation, en outre des moyens formant douille (3) étant prévus, agencés à l'intérieur de chaque second groupe (G2) d'éléments de rotation présentant un diamètre plus petit (D2), lesdits moyens formant douille (3) étant configurés pour entrer en contact avec, et recevoir à l'intérieur, des portions respectives de ladite barre (B) afin d'éviter tout contact de celle-ci avec lesdits éléments de rotation (2), et pour coulisser par rapport à ces derniers,
l'élément formant ressort ondulé étant **caractérisé en ce que** sur une surface externe (20) desdits moyens formant douille (3) des logements d'accueil en creux (21) sont obtenus lesquels s'étendent de manière sinusoïdale et sont mis en forme pour loger les éléments de rotation respectifs (2) et maintenir lesdits éléments de rotation dans une position fixe par rapport auxdits moyens formant douille (3).

2. Élément formant ressort ondulé selon la revendication 1, dans lequel lesdits moyens formant douille (3) comprennent un élément tubulaire (3A) présentant une portion cylindrique (C) sur laquelle les éléments de rotation (2) sont enroulés d'un second groupe respectif (G2) d'éléments de rotation ayant un diamètre plus petit (D2), et dans lequel entre chaque premier groupe (G1) et un second groupe adjacent (G2) des éléments de rotation intermédiaires (2') sont prévus présentant un diamètre compris entre ledit premier diamètre (D1) et ledit second diamètre (D2).

3. Élément formant ressort ondulé selon la revendication 2, dans lequel lesdits moyens formant douille (3) sont pourvus de portions de bord élargies (8) au niveau de chacune des deux extrémités (E1, E2) dudit élément tubulaire (3A), lesdites portions de bord élargies (8) étant configurées pour se coupler de manière externe à la surface interne d'éléments de rotation (2') de plus grand diamètre que le diamètre (D2) et placés au niveau des extrémités du second groupe respectif (G2), de manière à lier, de manière couplée par mise en forme, lesdits moyens formant douille (3) audit élément formant ressort ondulé (1).

4. Élément formant ressort ondulé selon la revendication 3, dans lequel lesdites portions de bord élargies (8) présentent en interne une surface tronconique divergente vers l'extérieur pour favoriser l'avancement de la barre (B) et favoriser son insertion à l'intérieur des moyens formant douille respectifs (3).

5. Élément formant ressort ondulé selon l'une quelconque des revendications 2 à 4, dans lequel lesdits moyens formant douille (3) comprennent chacun un élément annulaire (3B) placé à l'intérieur de l'élément tubulaire respectif (3A) et mobile en rotation par rapport à ce dernier, ledit élément annulaire (3B) et ledit élément tubulaire (3A) définissant ensemble une unité formant douille ou un palier coulissant, ledit élément annulaire (3B) étant rotatif, conjointement avec ladite barre (B), autour dudit axe longitudinal par rapport audit élément tubulaire (3A) qui, pendant le fonctionnement, peut rester dans une position fixe conjointement avec ladite pluralité d'éléments de rotation (2).

6. Élément formant ressort ondulé selon une quelconque revendication précédente, dans lequel au moins les éléments de rotation (2) des premiers groupes (G1) sont constitués d'un fil métallique qui est plastifié ou revêtu d'une couche de matériau qui est approprié pour ne pas rayer ou endommager les barres (B).

7. Élément formant ressort ondulé selon une quelconque revendication précédente, dans lequel lesdits éléments de rotation (2) sont constitués d'un fil métallique incurvé, et lesdits moyens formant douille (3) sont répartis, en un nombre souhaité, le long dudit axe longitudinal (AL) et sont espacés les uns des autres d'une quantité choisie en fonction du diamètre de la barre (B) à supporter et en fonction de l'épaisseur dudit fil métallique.

8. Procédé de production d'un élément formant ressort ondulé selon la revendication 1, comprenant les étapes de :
- a) enroulement d'une première portion d'un fil métallique pour donner un premier groupe (G1) d'éléments de rotation (2) qui sont mutuellement adjacents et qui présentent un premier diamètre (D1),
- b) enroulement d'une seconde portion, après ladite première portion, dudit fil métallique autour des moyens formant douille (3) de manière à donner un second groupe (G2) d'éléments de rotation (2) qui sont mutuellement adjacents et qui présentent un second diamètre (D2) inférieur audit premier diamètre (D1), dans lequel les éléments de rotation (2) dudit second groupe (G2) sont serrés autour desdits moyens formant douille (3) pour maintenir ces derniers dans une position stable,
- répétition en alternance desdites étapes a) et b) pour obtenir un élément formant ressort (1) ayant un profil sinusoïdal qui s'étend le long d'un axe longitudinal (AL) jusqu'à l'obtention d'une longueur souhaitée,
le procédé étant **caractérisé en ce qu'**il comprend en outre l'étape de :
- Obtention de logements d'accueil en creux (21) sur une surface externe (20) de l'élément tubulaire (3A) desdits moyens formant douille (3), dans lequel lesdits logements d'accueil en creux (21) s'étendent de manière sinusoïdale autour dudit axe longitudinal (AL) et sont mis en forme pour loger les éléments de rotation respectifs (2) et maintenir lesdits éléments de rotation (2) dans une position ferme par rapport auxdits moyens formant douille (3).
